# EUROPEAN PATENT APPLICATION

(11) **EP 4 841 709 A1**
(43) Date of publication of application: **18.11.2026**
(21) Application number: 25758667.7
(22) Date of filing: 24.02.2025
(51) Int. Cl.: H01M 4/505, H01M 4/525, H01M 4/131, H01M 10/052, C01G 53/50, G01N 23/2055, H01M 4/02

(54) **CATHODE ACTIVE MATERIAL, CATHODE AND LITHIUM SECONDARY BATTERY COMPRISING SAME, AND METHOD FOR EVALUATING QUALITY OF LITHIUM SECONDARY BATTERY**

(30) Priority: 23.02.2024 KR 20240026418
(71) Applicant: LG Chem, Ltd., Seoul 07336 (KR)
(72) Inventor: KIM, Ju Hyun, Daejeon 34122 (KR); YOON, Ju Han, Daejeon 34122 (KR); KIM, Jun Gil, Daejeon 34122 (KR); WON, Jae Hee, Daejeon 34122 (KR); KIM, Won Tae, Daejeon 34122 (KR); LIM, Young Geun, Daejeon 34122 (KR)
(74) Representative: Hoffmann Eitle
(86) International application number: PCT/KR2025/002532
(87) International publication number: WO 2025/178418

(57) **Abstract**

The present invention relates to a positive electrode active material, a positive electrode and a lithium secondary battery which include the same, and a method of evaluating quality of a lithium secondary battery, and provides the positive electrode active material including a lithium composite transition metal oxide, wherein a ratio of Lorentzian to Gaussian full width at half maximum (strain L/G), defined by Mathematical Equation 1 described in this specification, is 1.6 or less on an XRD peak pattern measured through XRD analysis, and the positive electrode and the lithium secondary battery including the same. In addition, the present invention provides the method of evaluating quality of a lithium secondary battery in which the lithium secondary battery includes a positive electrode containing a positive electrode active material having a lithium composite transition metal oxide; a negative electrode, and a separator disposed between the positive electrode and the negative electrode, and the method includes calculating a ratio of Lorentzian to Gaussian full width at half maximum (strain L/G), defined by Mathematical Equation 1 described in this specification, from an XRD peak pattern of the positive electrode active material; and determining as good if the ratio of Lorentzian to Gaussian full width at half maximum (strain L/G) is 1.6 or less and determining as defective if greater than 1.6.

## Description

### TECHNICAL FIELD

### Cross-reference to Related Applications

This application claims priority from Korean Patent Application No. 10-2024-0026418, filed on February 23, 2024, the disclosure of which is incorporated by reference herein.

### Technical Field

The present invention relates to a positive electrode active material, a positive electrode and a lithium secondary battery which include the same, and a method of evaluating quality of the lithium secondary battery.

### BACKGROUND ART

Due to the increase in technological development and demand for mobile devices, demand for secondary batteries as a source of energy is rapidly increasing. Among these secondary batteries, a lithium secondary battery, which has high energy density and high voltage, long cycle lifetime, and low self-discharging rate, is being commercialized and widely used.

A lithium composite transition metal oxide is used as a positive electrode active material of the lithium secondary battery, and among these, a lithium cobalt composite metal oxide of LiCoO₂ which has high operating voltage and excellent capacity characteristics is mainly used. However, since LiCoO₂ has very poor thermal characteristics due to destabilization of crystal structure by delithiation, and LiCoO₂ is expensive, there is limitation in using LiCoO₂ in large amount as a source of power in the field such as electric vehicles.

As a substituting material for LiCoO₂, a lithium manganese composite metal oxide (LiMnO₂, LiMn₂O₄, or the like), a lithium iron phosphate compound (LiFePO₄, etc.), a lithium nickel composite metal oxide (LiNiO₂, etc.), or the like were developed. Among these, research and development on a lithium nickel composite metal oxide, which is easy to implement in large-capacity batteries due to high reversible capacity of about 200 mAh/g, is actively conducted. However, LiNiO₂ has poor thermal stability, compared to LiCoO₂, and when the battery in a charged state has an internal short circuit occurring due to external pressure, etc., there is a problem that the positive electrode active material itself decomposes to cause battery rupture and ignition.

Accordingly, for maintaining the excellent reversible capacity of LiNiO₂ and improving low thermal stability, a nickel cobalt manganese-based lithium composite metal oxide with a part of Ni substituted with Mn and Co (hereinafter, simply referred to as 'NCM-based lithium oxide') was developed.

However, due to recent rise in the price of cobalt (Co), a Li-rich NCM-based positive electrode active material, which may be in accordance with the high capacity even with relatively less amount of cobalt (Co), is being developed.

### [Prior Art Document]

### [Patent Document]

(Patent Document 1) KR 10-2293046 B1 (Publication Date: August 24, 2021)

### DISCLOSURE OF THE INVENTION

### TECHNICAL PROBLEM

The present invention is to solve the problems as described above, and is to provide a positive electrode active material capable of improving discharge capacity characteristics and energy density of a battery when applied to a secondary battery.

In addition, the present invention is to provide a positive electrode and a lithium secondary battery which include the positive electrode active material.

In addition, the present invention provides a method of evaluating quality of a lithium secondary battery, wherein the quality of a lithium secondary battery may be evaluated from the properties of the positive electrode active material applied to the lithium secondary battery.

### TECHNICAL SOLUTION

To solve the above problem, the present invention provides a positive electrode active material, a positive electrode and a lithium secondary battery which include the same, and a method of evaluating quality of a lithium secondary battery.
(1) The present invention provides a positive electrode active material including a lithium composite transition metal oxide, wherein a ratio of Lorentzian to Gaussian full width at half maximum (strain L/G), defined by Mathematical Equation 1 below, is 1.6 or less on an XRD peak pattern measured through XRD analysis: 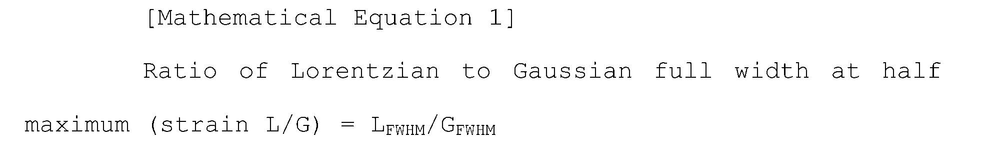 [Mathematical Equation 1] Ratio of Lorentzian to Gaussian full width at half maximum (strain L/G) = LFWHM/GFWHM
   In Mathematical Equation 1 above, L_{FWHM} is a full width at half maximum of a Lorentzian region on an XRD peak pattern, and G_{FWHM} is a full width at half maximum of a Gaussian region on the XRD peak pattern.
(2) The present invention provides the positive electrode active material of (1) above, wherein the ratio of Lorentzian to Gaussian full width at half maximum (strain L/G) is 0.95 or greater and 1.6 or less.
(3) The present invention provides the positive electrode active material of (1) or (2) above, wherein the full width at half maximum of the Lorentzian region is 0.25° or greater and 0.45° or less.
(4) The present invention provides the positive electrode active material of any one of (1) to (3) above, wherein the full width at half maximum of the Gaussian region is 0.24° or greater and 0.40° or less.
(5) The present invention provides the positive electrode active material of any one of (1) to (4) above, wherein a crystallite size measured through XRD analysis is 150 nm to 350 nm.
(6) The present invention provides the positive electrode active material of any one of (1) to (5) above, wherein the lithium composite transition metal oxide has a secondary particle form in which a plurality of primary particles is aggregated.
(7) The present invention provides the positive electrode active material of any one of (1) to (6) above, wherein the lithium composite transition metal oxide includes nickel and manganese.
(8) The present invention provides the positive electrode active material of any one of (1) to (7) above, wherein the lithium composite transition metal oxide includes Mn in an amount of 50 mol% or greater among transition metals excluding lithium.
(9) The present invention provides the positive electrode active material of any one of (1) to (8) above, wherein the lithium composite transition metal oxide is represented by Formula 1 below:

   [Formula 1] Liₓ[Mnₐ₁Ni_{b1}M¹_{c1}Co_{d1}]O₂

   In Formula 1 above, 1.1<x<1.3, 0.5≤a1<1, 0<b1<0.4, 0≤c1≤0.1, 0≤d1≤0.05, and x+a1+b1+c1+d1=2, and M¹ is one or more selected from the group consisting of Al, Cu, Fe, Mg, B, Cr, V, Ti, Ta, Nb, Mo, Y, W, and Zr.
(10) The present invention provides a positive electrode for a secondary battery including the positive electrode active material according to any one of (1) to (9) above.
(11) The present invention provides a lithium secondary battery including the positive electrode according to (10) above.
(12) The present invention includes a method of evaluating quality of a lithium secondary battery, in which the lithium secondary battery contains a positive electrode containing a positive electrode active material having a lithium composite transition metal oxide; a negative electrode and a separator disposed between the positive electrode and negative electrode, the method including calculating a ratio of Lorentzian to Gaussian full width at half maximum (strain L/G), defined by Mathematical Equation 1 below, on an XRD peak pattern of the positive electrode active material; and determining as good if the ratio of Lorentzian to Gaussian full width at half maximum (strain L/G) is 1.6 or less and determining as defective if greater than 1.6. 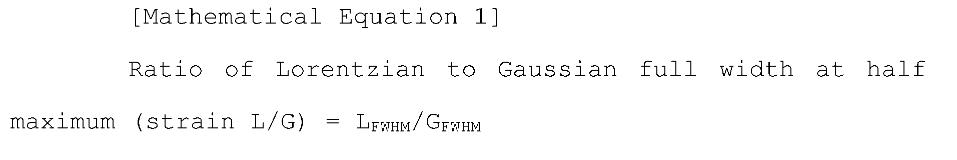 [Mathematical Equation 1] Ratio of Lorentzian to Gaussian full width at half maximum (strain L/G) = LFWHM/GFWHM the

In Mathematical Equation 1 above, L_{FWHM} is a full width at half maximum of a Lorentzian region on an XRD peak pattern, and G_{FWHM} is a full width at half maximum of a Gaussian region on the XRD peak pattern.

### ADVANTAGEOUS EFFECTS

The positive electrode active material according to the present invention satisfies the ratio of Lorentzian to Gaussian full width at half maximum (strain L/G) to be defined, and thus is effective in improving the battery capacity characteristics and energy density when it is applied to a lithium secondary battery.

The method of evaluating quality of the lithium secondary battery, according to the present invention, has the advantage that characteristics of the lithium secondary battery (for example, capacity characteristics, energy density, etc.) may be predicted through measurement of the XRD peak pattern of the positive electrode active material, and the characteristics may be identified without assembly of the battery.

### BEST MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

### Terminology

In the present invention, the term "primary particle" refers to a particle unit in which a grain boundary is not present in appearance when observed at 5000 times to 20000 times magnification using a scanning electron microscope (SEM).

In the present invention, the term 'secondary particle' is an agglomerate formed by aggregation of a plurality of primary particles, that is, a secondary structure.

In the present invention, the term 'crystallite size' is a particle size measured through XRD analysis, and particularly, the particle refers to a micro unit grain, which may be distinguished as grains having a form of crystal when enlarged and observed, and when the particle is further enlarged, divided regions in a lattice structure of atoms formed in a certain direction may be observed, and this refers to the crystallite. The crystallite size may be estimated through XRD analysis.

### Measurement Method

In the present invention, the ratio of Lorentzian to Gaussian full width at half maximum (strain L/G) was calculated using XRD (D8 ENDEAVOR of Bruker). X-ray light source of the XRD was Cu, and had a wavelength of λ=1.54056 Å. The goniometer radius was 200.5 mm, and the optics divergence slit was 0.5°. Data were collected using LynxEye detector, the number of detector channels was 192, the channel size was 0.075 mm, the detector angle was 4.1°, and the detector slit was 14.325 mm. Under conditions of X-ray beam strength of 40 kV/40 mA, 2θ=15° to 95°, step size=0.01°, and time/step=0.2, an XRD peak pattern of the positive electrode active material was obtained, and on the peak pattern, a full width at half maximum (FWHM) of a Lorentzian region and a FWHM of a Gaussian region were obtained, and then substituted into Mathematical Equation 1 below for calculation. At this time, a sample for the XRD measurement may be prepared by placing powder of the positive electrode active material on an XRD holder and then leveling the powder to the height of the XRD holder using a slide glass. 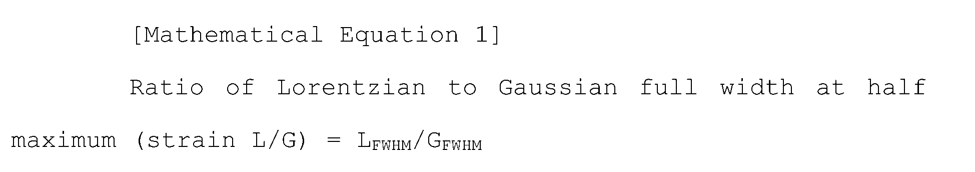 [Mathematical Equation 1] Ratio of Lorentzian to Gaussian full width at half maximum (strain L/G) = LFWHM/GFWHM

In Mathematical Equation 1 above, L_{FWHM} is a full width at half maximum of a Lorentzian region on an XRD peak pattern, and G_{FWHM} is a full width at half maximum of a Gaussian region on the XRD peak pattern.

In the present invention, the crystallite size is a value calculated in a FWHM method from the XRD analysis.

The present invention provides a positive electrode active material, a positive electrode and a lithium secondary battery which include the same, and a method of evaluating quality of a lithium secondary battery.

Hereinafter, the present invention will be described in more detail.

### Positive Electrode Active Material

The present invention provides a positive electrode active material, wherein the ratio of Lorentzian to Gaussian FWHM (strain L/G), defined by Mathematical Equation 1, may be controlled to improve charge and discharge capacity and energy density.

The positive electrode active material according to an embodiment of the present invention includes a lithium composite transition metal oxide, and is characterized by having a ratio of Lorentzian to Gaussian FWHM (strain L/G), defined by Mathematical Equation 1 below, of 1.6 or less on an XRD peak pattern measured through XRD analysis. 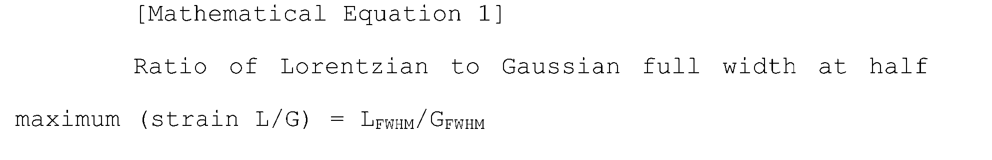 [Mathematical Equation 1] Ratio of Lorentzian to Gaussian full width at half maximum (strain L/G) = LFWHM/GFWHM

In Mathematical Equation 1 above, L_{FWHM} is a FWHM of a Lorentzian region on an XRD peak pattern, and G_{FWHM} is a FWHM of a Gaussian region on the XRD peak pattern.

The XRD peak has a form expressed by voigt function combining the Lorentzian function and the Gaussian function as below.
- Lorentzian function: L(x) = (1 / π) × (Γ / ((x - x0)² + Γ²))
   (x: independent variable, x0: central position, Γ: width of half the height of the peak)
- Gaussian function: G(x) = exp ( - (x - µ)² / (2σ²))
   (x: independent variable, µ: average value, σ: standard deviation)

Meanwhile, in case that a Mn-rich positive electrode material is difficult to synthesize due to large amount of Mn included therein, impurity phase such as LiMn₂O₄ spinel phase and Li₂MnO₃ monoclinic phase may be mixed on the XRD peak pattern. A XRD peak position of the impurity phase is similar with the XRD peak position of the Mn-rich positive electrode material, so that the peaks overlap each other.
Example 1) Peak position of Mn-rich (003): 18.65°, peak position of LiMn₂O₄ spinel phase (111): 18.66°, peak position of LiMnO₃ monoclinic phase (001): 18.68°
Example 2) Peak position of Mn-rich (104): 44.30°, peak position of LiMn₂O₄ spinel phase (400): 44.00°, peak position of LiMnO₃ monoclinic phase (131): 44.76°

Meanwhile, as the number of impurity phases is larger, more peaks overlap, and therefore, the shape of the peak may be changed, and accordingly, the ratio of Lorentzian region and Gaussian region may be changed.

The inventors of the present invention figured out that, when the ratio of Lorentzian to Gaussian FWHM (strain L/G), defined by Mathematical Equation 1 above, is 1.60 or less, the capacity at 0.33 C-rate is high, and also the energy density is high, and therefore, the inventors have completed the present invention. When the ratio of Lorentzian to Gaussian FWHM (strain L/G) defined by Mathematical Equation 1 above is 1.60 or less, the layered phase and monoclinic phase may be well-developed in an appropriate ratio without impurities in the positive electrode active material.

Meanwhile, when the ratio of Lorentzian to Gaussian FWHM (strain L/G) is greater than 1.6, the proportion of the monoclinic phase is too low, causing a problem of reducing the capacity.

Particularly, the ratio of Lorentzian to Gaussian FWHM (strain L/G) may be 0.95 or greater and 1.6 or less, and more particularly, 0.95 or greater, and 1.56 or less, 1.57 or less, 1.58 or less, 1.59 or less, or 1.60 or less. Meanwhile, when the ratio of Lorentzian to Gaussian FWHM (strain L/G) is less than 0.95, the proportion of the layered phase is too low, causing a problem of reducing the capacity.

At this time, the FWHM of the Lorentzian region may be 0.25° or greater and 0.45° or less, and more particularly, 0.25° or greater, 0.26° or greater, or 0.27°or greater, and 0.44°or less or 0.45°or less. In addition, the FWHM of the Gaussian region may be 0.24° or greater and 0.40° or less, and more particularly, 0.24° or greater, and 0.36° or less, 0.37° or less, 0.38° or less, 0.39° or less, or 0.45° or less.

The FWHM of the Lorentzian region or Gaussian region is affected by the degree of phase formation, but changes inversely proportional to the calcination temperature. Even if the calcination temperature changes, the ratio of Lorentzian to Gaussian FWHM changes simultaneously, and thus it may be more desirable in checking the degree of phase formation.

In addition, the positive electrode active material may have a crystallite size of 150 nm to 350 nm measured through XRD analysis, and particularly, 150 nm or greater, 151 nm or greater, 152 nm or greater, 153 nm or greater, 154 nm or greater, 155 nm or greater, 156 nm or greater, 157 nm or greater, 158 nm or greater, or 159 nm or greater, and 320 nm or less, 325 nm or less, 330 nm or less, 335 nm or less, 340 nm or less, 345 nm or less, or 350 nm or less.

The crystallite size also increases when the number of impurity phases increases, similar with the ratio of FWHM. This is not the case where the actual crystallite size increases, but the fitted value increases due to the peak overlapping the impurity phase. When the phase is well-developed, the value ranges from 150 nm to 350 nm, and highcapacity characteristics are exhibited.

When the ratio of Lorentzian to Gaussian FWHM, according to an embodiment of the present invention, is satisfied, the capacity characteristics and energy density of the lithium secondary battery applied therewith may be improved.

Since the impurity phase such as LiMn₂O₄ spinel phase and Li₂MnO₃ monoclinic phase has insufficient capacity characteristics, compared to the Mn-rich positive electrode material, higher capacity characteristics may be exhibited when the presented conditions are satisfied.

In addition, the lithium composite transition metal oxide may have a secondary particle form in which a plurality of primary particles is aggregated. That is, the lithium composite transition metal oxide may be a spherical secondary particle formed by aggregation of tens to hundreds of primary particles, and the primary particle may have a length of tens to hundreds nm measured through a SEM image, and may have a form that is intermediate between a needle and a rod having a large aspect ratio. In this case, there is the advantage in that, due to the increased specific surface area, movement of electrons becomes active, thereby improving the reactivity.

In addition, the lithium composite transition metal oxide may include nickel and manganese.

In particular, the lithium composite transition metal oxide may include Mn in an amount of 50 mol% or greater or 60 mol% or greater among transition metals excluding lithium.

More particularly, the lithium composite transition metal oxide may be a Li-rich manganese-based oxide represented by Formula 1 below. In this case, due to high content of manganese, more lithium may be included, and accordingly, delithiation of lithium may increase, so that the charge and discharge capacity may increase.

[Formula 1] Liₓ[Mnₐ₁Ni_{b1}M¹_{c1}Co_{d1}]O₂

In Formula 1 above, 1.1<x<1.3, 0.5≤a1<1, 0<b1<0.4, 0≤c1≤0.1, 0≤d1≤0.05, and x+a1+b1+c1+d1=2, and M¹ is one or more selected from the group consisting of Al, Cu, Fe, Mg, B, Cr, V, Ti, Ta, Nb, Mo, Y, W, and Zr.

x above may be particularly 1.1 or greater, 1.105 or greater, 1.110 or greater, 1.115 or greater, 1.120 or greater, or 1.125 or greater, and 1.135 or less, 1.140 or less, 1.150 or less, 1.200 or less, 1.250 or less, or 1.300 or less. In this case, excessive amount of lithium may enable activation and operation at high operating voltage.

a1 above is a ratio of the number of moles in manganese relative to the total number of moles in the entire metal excluding lithium, included in the lithium composite transition metal oxide, and is 0.50 or greater and less than 1.0. a1 above may be particularly 0.50 or greater, 0.51 or greater, 0.52 or greater, 0.53 or greater, 0.54 or greater, or 0.55 or greater, and 0.60 or less, 0.65 or less, 0.70 or less, 0.80 or less, 0.90 or less, or less than 1.0. Due to high content of manganese in the lithium composite transition metal oxide according to the present invention, more lithium may be included, and accordingly, delithiation of lithium may increase, so that the charge and discharge capacity may increase.

b1 above is a ratio of the number of moles in nickel relative to the total number of moles in the entire metal excluding lithium, included in the lithium composite transition metal oxide, and is greater than 0 and less than 0.40. b1 above may be particularly greater than 0, 0.10 or greater, 0.20 or greater, or 0.30 or greater, and 0.35 or less or less than 0.40. The lithium composite transition metal oxide according to the present invention includes nickel in an amount falling within the above-described amount ranges, and in this case, the initial efficiency, the discharge capacity retention rate, and the like may be further improved in a battery.

c1 above is a ratio of the number of moles in an M¹ element relative to the total number of moles in the entire metal excluding lithium, included in the lithium composite transition metal oxide, and is 0 or greater and 0.1 or less. c1 above may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less. In this case, the charge and discharge capacity, initial efficiency, discharge capacity retention rate, and the like may be further improved in a battery.

d1 above is a ratio of the number of moles in cobalt relative to the total number of moles in the entire metal excluding lithium, included in the lithium composite transition metal oxide, and is 0 or greater and 0.05 or less. d1 above may be 0 or greater, and 0.01 or less, 0.02 or less, 0.03 or less, 0.04 or less, or 0.05 or less. In this case, cobalt may be included in the amount of impurity, so that performance of the battery may not be reduced, and the effect according to the present invention may be realized. In particular, when c is 0, that is, when the lithium composite transition metal oxide is a co-free lithium composite transition metal oxide not including cobalt that is expensive, it has the advantage of being economically advantageous as it reduces costs.

The positive electrode active material according to the present invention may be prepared by mixing a positive electrode active material precursor and a lithium raw material and then performing a calcination, but is not limited thereto.

The positive electrode active material precursor may include a transition metal hydroxide, and the transition metal hydroxide may include Ni and Mn. In addition, the transition metal hydroxide may include Mn in an amount of 50 mol% or greater or 60 mol% or greater among transition metals.

In addition, the transition metal hydroxide may be represented by Formula 2 below.

[Formula 2] [Mnₐ₂Ni_{b2}M²_{c2}Co_{d2}](OH)₂

In Formula 2 above, 0.5≤a2<1, 0<b2<0.4, 0≤c2≤0.1, and a2+b2+c2=1, and M² is one or more selected from the group consisting of Al, Cu, Fe, Mg, B, Cr, V, Ti, Ta, Nb, Mo, Y, W, and Zr.

a2 above is a ratio of the number of moles in manganese relative to the total number of moles in the entire metal included in the transition metal hydroxide, and is 0.50 or greater and less than 1.0. a2 above may be particularly 0.50 or greater, 0.51 or greater, 0.52 or greater, 0.53 or greater, 0.54 or greater, 0.55 or greater, 0.56 or greater, 0.57 or greater, 0.58 or greater, 0.59 or greater, 0.60 or greater, or 0.65 or greater, and 0.70 or less, 0.80 or less, 0.90 or less, or less than 1.0.

b2 above is a ratio of the number of moles in nickel relative to the total number of moles in the entire metal, included in the transition metal hydroxide, and is greater than 0 and less than 0.40. b2 above may be particularly greater than 0, 0.10 or greater, 0.20 or greater, or 0.30 or greater, and 0.35 or less or less than 0.40.

c2 above is a ratio of the number of moles of an M² element relative to the total number of moles in the entire metal included in the transition metal hydroxide, and is 0 or greater and 0.1 or less. c2 above may be 0 or greater, and 0.01 or less, 0.02 or less, 0.03 or less, 0.04 or less, 0.05 or less, 0.06 or less, 0.07 or less, 0.08 or less, 0.09 or less, or 0.10 or less.

d2 above is a ratio of the number of moles in cobalt relative to the total number of moles in the entire metal, included in the transition metal hydroxide, and is 0 or greater and 0.05 or less. d2 above may be 0 or greater, and 0.01 or less, 0.02 or less, 0.03 or less, 0.04 or less, or 0.05 or less.

The transition metal hydroxide may not include Co in terms of cost reduction.

The lithium raw material may include a lithiumcontaining carbonate (for example, lithium carbonate), hydrate (for example, lithium hydroxide hydrate (LiOH·H₂O)), hydroxide (for example, lithium hydroxide), nitrate (for example, lithium nitrate (LiNo₃)), chloride (for example, lithium chloride (LiCl)), etc., and one along or a mixture of two or more thereof may be used.

Meanwhile, the mixture of the positive electrode active material precursor and the lithium raw material may be formed as a solid-phase mixture, and the mixed ratio of the positive electrode active material precursor and the lithium raw material may be determined within a range that satisfies a mole fraction of each component of the positive electrode active material to be finally prepared. More particularly, the positive electrode active material precursor and the lithium raw material may be mixed such that the molar ratio of the positive electrode active material precursor and a lithium element in the lithium raw material becomes 1:1.2 to 1:1.6. In addition, the mixing may be performed, using an acoustic mixer, at a force of 10 G to 80 G (G: acceleration of gravity) for 15 minutes to 35 minutes.

Furthermore, although not necessary, in addition to the positive electrode active material precursor and the lithium raw material, raw materials may be additionally included for doping a transition metal of the positive electrode active material and/or some oxygen during the mixing. For example, the above-described M¹-containing raw material or an X-containing raw material, to be described later, may be additionally mixed during the mixing. At this time, examples of the X-containing raw material may include Na₃PO₄, K₃PO₄, Mg₃(PO₄)₂, AlF₃, NH₄F, and LiF, but the example is not limited thereto. In case that some oxygen is substituted with the X element, as previously described, effect of suppressing oxygen desorption and reaction with an electrolyte solution, during charging and discharging of a secondary battery, may be obtained.

Meanwhile, the calcination may be performed at 700 °C to 1000 °C, and particularly, 750 °C to 950 °C, and duration of the calcination may be 5 hours to 30 hours, and particularly, 8 hours to 15 hours, but an embodiment is not limited thereto. In addition, the calcination may be performed under an air atmosphere.

Meanwhile, washing and drying may be additionally performed in order to remove lithium byproducts after the calcination. For example, the washing may be performed in a method in which the prepared positive electrode active material is added into ultra-pure water and agitated. At this time, the temperature for the washing may be 20 °C or lower, and particularly, 10 °C to 20 °C, and duration of the washing may be about 10 minutes to 1 hour. When the temperature and duration for the washing fall within the above ranges, respectively, the lithium byproducts may be effectively removed.

### Positive Electrode and Lithium Secondary Battery

The positive electrode active material according to the present invention may be useful in preparation of a positive electrode for a secondary battery.

In particular, the positive electrode for a secondary battery according to the present invention includes a positive electrode current collector and a positive electrode active material layer formed on the positive electrode current collector, and at this time, the positive electrode active material layer includes the positive electrode active material.

The positive electrode may be prepared according to a general preparation method for a positive electrode, except that the above-described positive electrode active material is used. For example, the positive electrode may be prepared in a method of dissolving or dispersing components constituting the positive electrode active material layer, that is, the positive electrode active material, a conductive material and/or a binder, etc. in a solvent to prepare a positive electrode composite material, and applying the positive electrode composite material onto at least one side of the positive electrode current collector, and then drying and roll-pressing the applied positive electrode composite material, or the positive electrode may be prepared by performing a casting of the positive electrode composite material onto a separate support, and then laminating a film separated from the support onto the positive electrode current collector.

At this time, the positive electrode current collector is not particularly limited as long as it does not cause chemical change in a battery and has conductivity, and for example, stainless steel, aluminum, nickel, titanium, calcined carbon, or aluminum or stainless steel that is surface-treated with carbon, nickel, titanium, silver, etc. may be used. In addition, the positive electrode current collector may generally have a thickness of 3 µm to 500 µm, and microscopic irregularities may also be formed on a surface of the current collector to improve adhesion of the positive electrode active material. For example, the positive electrode current collector may be used in various forms including a film, a sheet, a foil, a net, a porous body, a foam body, a non-woven fabric body, etc.

The positive electrode active material layer, which includes the positive electrode active material according to the present invention and selectively further includes at least one of the conductive material or the binder, as needed, is positioned on at least one side of the current collector.

The positive electrode active material may be included in an amount of 80 to 99 wt%, and more particularly, 85 to 98 wt% on the basis of the total weight of the positive electrode active material layer. When the amount to be included falls within the above ranges, excellent capacity characteristics may be exhibited.

The conductive material is used to provide conductivity to an electrode, and any material that does not cause chemical change and conducts electrons may be used in a battery without particular limitation. Specific examples may be graphite such as natural graphite or artificial graphite; a carbon-based material including carbon black, acetylene black, ketjen black, channel black, furnace black, lamp black, thermal black, a carbon fiber, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 1 wt% to 30 wt% on the basis of the total weight of the positive electrode active material layer.

In addition, the binder serves to improve binding between the positive electrode active material particles and adhesion between the positive electrode active material and the current collector. Specific examples may include polyvinylidene fluoride (PVDF), a vinylidene fluoridehexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), fluorine rubber, or various copolymers thereof, and any one alone or a mixture of two or more thereof may be used. The binder may be included in an amount of 1 wt% to 30 wt% on the basis of the total weight of the positive electrode active material layer.

Meanwhile, the solvent used for preparing the positive electrode composite material may be a solvent generally used in the relevant art, examples may include dimethyl sulfoxide (DMSO), isopropyl alcohol, N-methylpyrrolidone (NMP), acetone, water, or the like, and one alone or a mixture thereof may be used. The amount of the solvent to be used may be appropriately adjusted in consideration of the thickness of a slurry to be applied, manufacturing yield, viscosity, etc.

In addition, a lithium secondary battery according to the present invention includes a positive electrode, a negative electrode positioned opposite to the positive electrode, a separator disposed between the positive electrode and the negative electrode, and an electrolyte, and at this time, the positive electrode is the positive electrode according to the present invention, previously described.

Meanwhile, the lithium secondary battery may selectively further include a battery case that accommodates an electrode assembly of the positive electrode, the negative electrode, and the separator, and a sealing member that seals the battery case.

In the secondary battery, the negative electrode includes a negative electrode current collector and a negative electrode active material layer positioned on at least one side of the negative electrode current collector.

The negative electrode may be prepared according to a general preparation method for a negative electrode known to the relevant art. For example, the negative electrode may be prepared in a method of dissolving or dispersing components constituting the negative electrode active material layer, that is, the negative electrode active material, a conductive material and/or a binder, etc. in a solvent to prepare a negative electrode composite material, and applying the negative electrode composite material onto at least one side of the negative electrode current collector, and then drying and roll-pressing the applied negative electrode composite material, or the negative electrode may be prepared by performing a casting of the negative electrode composite material onto a separate support, and then laminating a film separated from the support onto the negative electrode current collector.

The negative electrode current collector is not particularly limited as long as it does not cause chemical change in a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 µm to 500 µm, and like the positive electrode current collector, microscopic irregularities may also be formed on a surface of the current collector to strengthen binding force of the negative electrode active material. For example, the current collector may be used in various forms including a film, a sheet, a foil, a net, a porous body, a foam body, a non-woven fabric body, etc.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping and dedoping lithium such as SiOᵥ(0<v<2), SnO₂, vanadium oxide, and lithium vanadium oxide; or a composite containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, scaly, spherical, or fibrous natural graphite or artificial graphite, kish graphite, pyrolytic carbon, mesophase pitch based carbon fiber, meso-carbon microbeads, and mesophase pitches, and high-temperature calcined carbon such as petroleum or coal tar pitch derived cokes.

In addition, the binder and the conductive material may be the same as what is previously described for the positive electrode.

Meanwhile, in the secondary battery, the separator separates the negative electrode and the positive electrode, and provides a movement path of lithium ions, any separator generally used for a secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

Meanwhile, the electrolyte may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a secondary battery, but is not limited thereto.

In particular, the electrolyte may include an organic solvent and a lithium salt.

Any organic solvent may be used as the organic solvent, without particular limitation, as long as it may function as a medium through which ions involved in an electrochemical reaction of the battery may move. Particularly, as the organic solvent, an ester-based solvent including methyl acetate, ethyl acetate, γ-butyrolactone, ε-caprolactone, etc.; an ether-based solvent including dibutyl ether, tetrahydrofuran, or the like; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylenecarbonate (EC), propylene carbonate (PC), etc.; an alcohol-based solvent including ethylalcohol, isopropyl alcohol, etc.; nitriles including Ra-CN (where, Ra is a linear, branched, or cyclic C2 to 20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred. In this case. when the cyclic carbonate and chain carbonate are mixed in a volume ratio of about 1:1 to about 9, performance of an electrolyte solution may be excellent.

Any compound capable of providing lithium ions that are used in a lithium secondary battery may be used for the lithium salt without particular limitation. In particular, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of lithium salt falls within the above ranges, the electrolyte may have appropriate conductivity and viscosity, and therefore, excellent performance of the electrolyte may be exhibited, and lithium ions may move effectively.

In addition to the electrolyte components, at least one additive, for example, a halo-alkylene carbonate-based compound such as difluoroethylene carbonate; or pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of a battery, suppressing the reduction in battery capacity, improving discharge capacity of the battery, etc. At this time, the additive may be included in an amount of 0.1 wt% to 5 wt% on the basis of the total weight of the electrolyte.

Since the secondary battery including the positive electrode active material according to the present invention, as previously described, has excellent capacity characteristics and energy density, the secondary battery may be usefully applied in the field of mobile devices, such as a mobile phone, a laptop computer, and a digital camera, and in the field of electric vehicles such as a hybrid electric vehicle (HEV).

Furthermore, the secondary battery according to the present invention may be used as a unit cell of a battery module, and the battery module may be applied to a battery pack. The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

### Method of Evaluating Quality of Lithium Secondary Battery

The present invention provides a method of evaluating quality of a lithium secondary battery, wherein the quality of a lithium secondary battery may be evaluated from the properties of a positive electrode active material applied to the lithium secondary battery.

For a lithium secondary battery including a positive electrode containing a positive electrode active material having a lithium composite transition metal oxide; a negative electrode, and a separator disposed between the positive electrode and the negative electrode, the method of evaluating quality of a lithium secondary battery according to an embodiment of the present invention includes calculating a ratio of Lorentzian to Gaussian full width at half maximum (strain L/G), defined by Mathematical Equation 1 below, on an XRD peak pattern of the positive electrode active material; and determining as good if the ratio of Lorentzian to Gaussian full width at half maximum (strain L/G) is 1.6 or less and determining as defective if greater than 1.6. In particular, the method of evaluating quality of a lithium secondary battery may include determining as good if the ratio of Lorentzian to Gaussian full width at half maximum (strain L/G) is 0.95 to 1.6 and determining as defective if greater than 1.6 or less than 0.95. 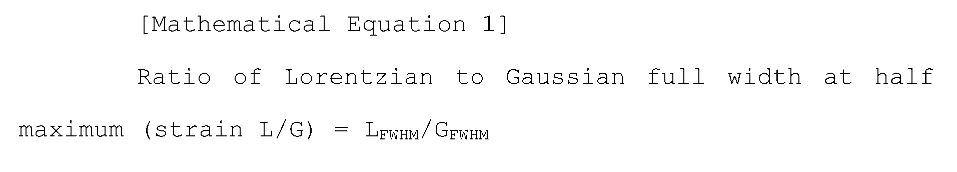 [Mathematical Equation 1] Ratio of Lorentzian to Gaussian full width at half maximum (strain L/G) = LFWHM/GFWHM

In Mathematical Equation 1 above, L_{FWHM} is a FWHM of a Lorentzian region on an XRD peak pattern, and G_{FWHM} is a FWHM of a Gaussian region on the XRD peak pattern.

In order to evaluate the capacity of the positive electrode active material, assembling a coin cell to check the capacity is currently the only way. This is the most accurate method for checking the capacity, but since at least one day is required until the capacity develops, there is a problem that battery performance may not be seen quickly.

To solve this, the present inventors have identified factors associated with the capacity of the positive electrode active material. In particular, the present inventors have found that, when a ratio of Lorentzian to Gaussian FWHM (strain L/G), defined by Mathematical Equation 1 above, on an XRD peak pattern of the positive electrode active material is 1.6 or less, a phase of the positive electrode active material is well-developed without impurities to thereby secure high capacity at 0.33 C-rate.

According to the present invention, there is the advantage in that characteristics of the lithium secondary battery (for example, capacity characteristics and energy density) may be predicted through measurement of an XRD peak pattern of the positive electrode active material, and the characteristics may be identified without assembly of the battery.

### MODE FOR CARRYING OUT THE INVENTION

Hereinafter, examples of the present invention will be described in detail so that those skilled in the art, to which the present invention pertains, may easily carry out the present invention. However, the present invention may be implemented in several different forms, and is not limited to the examples to be described herein.

### Example and Comparative Example

### Example 1

A positive electrode active material precursor (Mn_{0.65}Ni_{0.35}(OH)₂) and LiOH were mixed such that the molar ratio of transition metals (Ni and Mn) in the precursor and Li in LiOH became 1:1.32, and then under an air atmosphere, calcination was performed at 910 °C for 9 hours to prepare a positive electrode active material (Li_{1.13}Mn_{0.57}Ni_{0.30}O₂). At this time, the mixing was performed using an acoustic mixer (Resodyn Acoustic Mixer LabRAM II of LMTECH), and performed at a force of 20 G (G: acceleration of gravity) for 34 minutes.

### Example 2

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 33 minutes.

### Example 3

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 32 minutes.

### Example 4

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 31 minutes.

### Example 5

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 30 minutes.

### Example 6

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 29 minutes.

### Example 7

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 28 minutes.

### Example 8

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 27 minutes.

### Example 9

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 26 minutes.

### Example 10

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 25 minutes.

### Example 11

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 24 minutes.

### Example 12

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 23 minutes.

### Example 13

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 22 minutes.

### Example 14

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 21 minutes.

### Example 15

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 20 minutes.

### Comparative Example 1

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 13 minutes.

### Comparative Example 2

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 12 minutes.

### Comparative Example 3

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 11 minutes.

### Comparative Example 4

A positive electrode active material (Li_{1.13}Mn_{0.57}Ni_{0.30}O₂) was prepared in the same way as that of Example 1, except that the mixing in Example 1 above was performed at a force of 20 G (G: acceleration of gravity) for 10 minutes.

### Experimental Example

### Experimental Example 1

Particle characteristics of each of the positive electrode active materials prepared according to the examples and comparative examples were analyzed, and the results were listed in Table 1 below.

In particular, the crystal structure, crystallite size, and lattice strain were analyzed through XRD analysis.

The XRD analysis was performed using D8 ENDEAVOR (Bruker) under conditions of Cu source, λ=1.54056 Å, 2θ=15° to 95°, step size=0.01°, and time/step=0.2, and a sample for the measurement was prepared in a way that powder of the positive electrode active material was placed on an XRD holder, and then leveled to the height of the XRD holder using a slide glass.

**[Table 1]**

| Classif ication | Crystal structure (a=b≠c, α,β=90°, γ=120°) | | | Cryst allit e Size (nm) | Lattice strain | | |
|---|---|---|---|---|---|---|---|
| | a (Å) | c (Å) | c/a | | LFWHM ( ° ) | G_{FWHM} ( ° ) | Stra in L/G |
| Example 1 | 2.872 6 | 14.2836 | 4.9723 | 159.5 000 | 0.2717 | 0.2840 | 0.95 67 |
| Example 2 | 2.872 4 | 14.2822 | 4.9723 | 205.0 000 | 0.3595 | 0.3600 | 0.99 86 |
| Example 3 | 2.872 4 | 14.2838 | 4.9728 | 176.6 000 | 0.3139 | 0.2800 | 1.12 11 |
| Example 4 | 2.872 4 | 14.2827 | 4.9725 | 182.3 000 | 0.3143 | 0.2770 | 1.13 47 |
| Example 5 | 2.872 7 | 14.2827 | 4.9719 | 192.3 000 | 0.3230 | 0.2770 | 1.16 61 |
| Example 6 | 2.872 4 | 14.2833 | 4.9726 | 212.0 000 | 0.3391 | 0.2740 | 1.23 76 |
| Example 7 | 2.872 3 | 14.2826 | 4.9725 | 197.2 000 | 0.3578 | 0.2830 | 1.26 43 |
| Example 8 | 2.872 7 | 14.2826 | 4.9719 | 194.0 000 | 0.3430 | 0.2660 | 1.28 95 |
| Example 9 | 2.872 4 | 14.2828 | 4.9725 | 199.0 000 | 0.3655 | 0.2760 | 1.32 43 |
| Example 10 | 2.872 5 | 14.2831 | 4.9723 | 232.0 000 | 0.3437 | 0.2540 | 1.35 31 |
| Example 11 | 2.872 5 | 14.2820 | 4.9720 | 320.0 000 | 0.4377 | 0.3050 | 1.43 51 |
| Example 12 | 2.872 7 | 14.2833 | 4.9720 | 258.0 000 | 0.3777 | 0.2560 | 1.47 54 |
| Example 13 | 2.872 7 | 14.2830 | 4.9720 | 254.0 000 | 0.3675 | 0.2470 | 1.48 79 |
| Example 14 | 2.872 5 | 14.2842 | 4.9728 | 217.0 000 | 0.3838 | 0.2570 | 1.49 34 |
| Example 15 | 2.872 3 | 14.2828 | 4.9727 | 229.0 000 | 0.3951 | 0.2540 | 1.55 55 |
| Compara tive Example 1 | 2.872 9 | 14.2841 | 4.9721 | 250.0 000 | 0.3845 | 0.2402 | 1.60 08 |
| Compara tive Example 2 | 2.872 0 | 14.2824 | 4.9730 | 230.0 000 | 0.4059 | 0.2430 | 1.67 04 |
| Compara tive Example 3 | 2.872 2 | 14.2833 | 4.9730 | 262.0 000 | 0.4204 | 0.2430 | 1.73 00 |
| Compara tive Example 4 | 2.872 6 | 14.2845 | 4.9727 | 309.0 000 | 0.3997 | 0.2100 | 1.90 33 |

Referring to Table 1, it can be seen that, in case of the positive electrode active materials according to Examples 1 to 15, the ratio of Lorentzian to Gaussian FWHM (strain L/G), defined by Mathematical Equation 1 described in this specification, was 0.95 or greater and 1.6 or less, but in case of the positive electrode active materials according to Comparative Examples 1 to 4, the ratio of Lorentzian to Gaussian FWHM (strain L/G), defined by Mathematical Equation 1 described in this specification, was greater than 1.6.

### Experimental Example 2

A positive electrode and a lithium secondary battery were prepared using the positive electrode active material prepared according to each of the examples and comparative examples, and then evaluation of battery performance was performed.

### (1) Preparation of Positive Electrode

Each of the positive electrode active materials prepared as above, a carbon black conductive material, and a PVdF binder were mixed in an N-methylpyrrolidone solvent in a weight ratio of 92.5:3.0:4.5 to prepare a positive electrode composite material (viscosity: 5000 mPa·s), and the positive electrode composite material was applied to one side of an aluminum current collector, then dried at 130 °C, and then pressed to prepare a positive electrode.

### (2) Preparation of Lithium Secondary Battery

A lithium metal was used for a negative electrode.

A porous polyethylene separator was disposed between the positive electrode and negative electrode, prepared as above, to prepare an electrode assembly, and the electrode assembly was positioned inside a case, and then an electrolyte solution was injected into the case to prepare a lithium secondary battery. At this time, lithium hexafluorophosphate (LiPF₆) at a concentration of 1.0 M was dissolved in an organic solvent made of ethylene carbonate/ ethylmethylcarbonate (the mixed volume ratio of EC/EMC = 3/7) to prepare the electrolyte solution.

Each of the lithium secondary battery half-cells, prepared as above, was charged at 45 °C in CCCV mode until 0.1 C and 4.65 V, and discharged with a constant current of 0.1 C until 2.0 V. After this, the half-cell was charged at 25 °C in CCCV mode until 0.1 C and 4.4 V, and discharged with a constant current of 0.1 C until 2.5 V. After this, the half-cell was charged at 25 °C in CCCV mode until 0.33 C and 4.4 V, and discharged with a constant current of 0.33 C until 2.5 V. In the meantime, the charge and discharge capacity at 0.33 C, average discharge voltage, and energy density were measured. The results were listed in Table 2 below.

**[Table 2]**

| Classification | 0.33 C charge capacity (mAh/g) | 0.33 C discharge capacity (mAh/g) | Average discharge voltage(V) | Energy density (mWh/g) |
|---|---|---|---|---|
| Example 1 | 216.4 | 205.600 | 3.693 | 759.200 |
| Example 2 | 215.6 | 205.500 | 3.674 | 754.800 |
| Example 3 | 213.9 | 202.100 | 3.680 | 743.700 |
| Example 4 | 214.2 | 202.300 | 3.684 | 744.900 |
| Example 5 | 214.1 | 203.100 | 3.678 | 746.800 |
| Example 6 | 212.4 | 201.000 | 3.679 | 739.700 |
| Example 7 | 212.5 | 202.000 | 3.671 | 741.600 |
| Example 8 | 212.2 | 201.600 | 3.681 | 741.800 |
| Example 9 | 212.0 | 201.500 | 3.670 | 739.400 |
| Example 10 | 213.2 | 201.300 | 3.678 | 740.300 |
| Example 11 | 212.5 | 202.400 | 3.661 | 741.100 |
| Example 12 | 212.2 | 201.800 | 3.672 | 740.900 |
| Example 13 | 212.1 | 201.000 | 3.673 | 738.200 |
| Example 14 | 211.3 | 200.500 | 3.668 | 735.434 |
| Example 15 | 211.4 | 200.700 | 3.667 | 736.000 |
| Comparative Example 1 | 210.6 | 199.800 | 3.674 | 734.000 |
| Comparative Example 2 | 210.3 | 199.600 | 3.666 | 731.700 |
| Comparative Example 3 | 210.5 | 199.600 | 3.664 | 731.400 |
| Comparative Example 4 | 211.4 | 199.800 | 3.673 | 733.700 |

Referring to Tables 1 and 2, in case of the positive electrode active materials according to Examples 1 to 15 where the ratio of Lorentzian to Gaussian FWHM (strain L/G) was 1.6 or less, the discharge capacity was excellent, and the energy density was excellent, compared to the positive electrode active materials according to Comparative Examples 1 to 4 where the ratio of Lorentzian to Gaussian FWHM (strain L/G) was greater than 1.6.

As a result, it can be seen that the positive electrode active material according to the present invention has the ratio of Lorentzian to Gaussian FWHM (strain L/G), defined by Mathematical Equation 1 described in this specification, satisfying 1.6 or less, and therefore, there is the effect of improving the capacity characteristics and energy density of a battery when the positive electrode active material is applied to the lithium secondary battery. Furthermore, it can be seen that the capacity characteristics and energy density of the lithium secondary battery may be predicted through measurement of an XRD peak pattern of the positive electrode active material without assembling the battery.

## Claims

1. A positive electrode active material comprising a lithium composite transition metal oxide,
wherein a ratio of Lorentzian to Gaussian full width at half maximum (strain L/G), defined by Mathematical Equation 1 below, is 1.6 or less on an XRD peak pattern measured through XRD analysis: [Mathematical Equation 1] 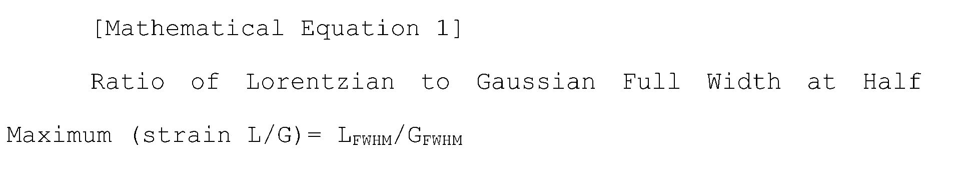 Ratio of Lorentzian to Gaussian Full Width at Half Maximum (strain L/G)= LFWHM/GFWHM
where, in Mathematical Equation 1 above,
L_{FWHM} is a full width at half maximum of a Lorentzian region on an XRD peak pattern, and G_{FWHM} is a full width at half maximum of a Gaussian region on the XRD peak pattern.

2. The positive electrode active material of claim 1, wherein the ratio of Lorentzian to Gaussian full width at half maximum (strain L/G) is 0.95 or greater and 1.6 or less.

3. The positive electrode active material of claim 1, wherein the full width at half maximum of the Lorentzian region is 0.25° or greater and 0.45° or less.

4. The positive electrode active material of claim 1, wherein the full width at half maximum of the Gaussian region is 0.24° or greater and 0.40° or less.

5. The positive electrode active material of claim 1, wherein a crystallite size, measured through XRD analysis, is 150 nm to 350 nm.

6. The positive electrode active material of claim 1, wherein the lithium composite transition metal oxide has a secondary particle form in which a plurality of primary particles is aggregated.

7. The positive electrode active material of claim 1, wherein the lithium composite transition metal oxide comprises nickel and manganese.

8. The positive electrode active material of claim 1, wherein the lithium composite transition metal oxide comprises Mn in an amount of 50 mol% or greater among transition metals excluding lithium.

9. The positive electrode active material of claim 1, wherein the lithium composite transition metal oxide is represented by Formula 1 below:
[Formula 1] Liₓ[Mnₐ₁Ni_{b1}M¹_{c1}Co_{d1}]O₂
where, in Formula 1 above,
1.1<x<1.3, 0.5≤a1<1, 0<b1<0.4, 0≤c1≤0.1, 0≤d1≤0.05, and x+a1+b1+c1+d1=2, and
M¹ is one or more selected from the group consisting of Al, Cu, Fe, Mg, B, Cr, V, Ti, Ta, Nb, Mo, Y, W, and Zr.

10. A positive electrode comprising the positive electrode active material according to claim 1.

11. A lithium secondary battery comprising the positive electrode according to claim 9.

12. A method of evaluating quality of a lithium secondary battery, in which the lithium secondary battery comprises a positive electrode including a positive electrode active material containing a lithium composite transition metal oxide; a negative electrode, and a separator disposed between the positive electrode and the negative electrode, the method comprising:
calculating a ratio of Lorentzian to Gaussian full width at half maximum (strain L/G), defined by Mathematical Equation 1 below, from an XRD peak pattern of the positive electrode active material; and
determining as good if the ratio of Lorentzian to Gaussian full width at half maximum (strain L/G) is 1.6 or less and determining as defective if greater than 1.6. [Mathematical Equation 1] 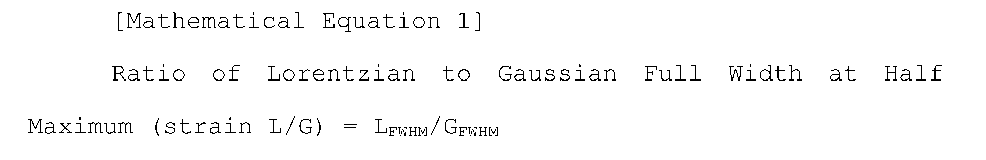 Ratio of Lorentzian to Gaussian Full Width at Half Maximum (strain L/G) = LFWHM/GFWHM
wherein, in Mathematical Equation 1 above, L_{FWHM} is a full width at half maximum of a Lorentzian region on an XRD peak pattern, and G_{FWHM} is a full width at half maximum of a Gaussian region on the XRD peak pattern.
